# EUROPÄISCHE PATENTANMELDUNG

(11) **EP 0 918 231 A2**
(43) Veröffentlichungstag der Anmeldung: **26.05.1999**
(21) Anmeldenummer: 98117951.8
(22) Anmeldetag: 22.09.1998
(51) Int. Cl.: G01S 3/803

(54) **Verfahren zum Bestimmen der Einfallsrichtung empfangener Schallimpulse**

(30) Priorität: 16.10.1997 DE 19745726
(71) Anmelder: STN ATLAS Elektronik GmbH, 28309 Bremen (DE)
(72) Erfinder: Loges, Werner, 28357 Bremen (DE)

(57) **Zusammenfassung**

Zum Bestimmen der Einfallsrichtung empfangener Schallimpulse aus Empfangssignalen einer Sonarbasis werden Richtcharakteristiksignale durch Laufzeitkompensation der Empfangssignale gebildet. Um eine Anzeige der Einfallsrichtung bei Empfang von Schallimpulsen über Grating-Lobes auszuschließen, wird erfindungsgemäß die Einhüllende jedes Richtcharakteristiksignals mit impulsförmigen Signalinhalt gebildet und die Steigung der Einhüllenden bestimmt. Die Einhüllende mit der größten Steigung kennzeichnet die Empfangsrichtung des Schallimpulses.

Dieses Verfahren ermöglicht den Einsatz von Seitenantennen und Hufeisenantennen zum Bestimmen der Einfallsrichtung von Schallimpulsen und gewährleistet eine Unterdrückung von Fehlanzeigen durch Scheinziele.

## Beschreibung

Die Erfindung betrifft ein Verfahren zum Bestimmen der Einfallsrichtung empfangener Schallimpulse der im Oberbegriff des Patentanspruchs genannten Gattung.

Der Empfang von Schallwellen eines gesendeten Schallimpulses ermöglicht die Peilung eines Wasserfahrzeuges, auf dem die sendende Aktivsonaranlage installiert ist. Aus dem Artikel "Classification and Identification - CAI - by Submarinesonars" von L.Kühnle in Navel Forces No.VI, 1987 sind Ortungsmöglichkeiten eines U-Bootes zur Lagebestimmung beschrieben. Fahrgeräusche und gesendete Schallimpulse von Wasserfahrzeugen werden mit mehreren Sonarbasen empfangen, die an unterschiedlichen Orten an Bord des U-Bootes installiert sind und für unterschiedliche Empfangsfrequenzbereiche optimal ausgelegt sind.

Der Empfang von Schallwellen eines gesendeten Schallimpulses ermöglicht neben einer Peilung eine Analyse seines Signalinhalts bezüglich Frequenz und Modulationsart, Impulslänge und Amplitude und dadurch Rückschlüsse auf Sender und Wasserfahrzeug. Um diese wertvollen Information zu erhalten, ist an Bord des U-Boots eine spezielle Interceptbasis vorgesehen, die in der DE-PS 31 50 456 beschrieben ist. Aber auch mit einer im Bug des U-Boots gezeigten Zylinderbasis eines Passivpanaramasonars "PPS" oder mit einer an der Längsseite installierten Linearantenne mit einem Flank-Array-Sonar "FAS" werden Schallimpulse empfangen.

Frequenzen der Schallwellen des Schallimpulses liegen häufig wesentlich über dem Frequenzbereich, für den Abstände von elektroakustischen Wandlern auf der Zylinderbasis oder dem Flank-Array (Seitenantenne) ausgelegt sind. Immer dann, wenn die Abstände der Wandler größer als die halbe empfangene Wellenlänge sind, weist die Richtungscharakteristik außer der Hauptkeule Nebenkeulen gleicher Empfangsempfindlichkeit, sog. Grating-Lobes, auf. Bei Empfang von Schallwellen aus Grating-Lobe-Richtungen, täuscht das Richtcharakteristiksignal einen Empfang aus der Hauptempfangsrichtung der Richtcharakteristik vor, da eine Trennung durch Pegelvergleich nicht möglich ist. Diese Grating-Lobe-Richtungen sind abhängig von der empfangenen Wellenlänge und den Abständen der Wandler auf der Sonarbasis.

Es ist Aufgabe der vorliegenden Erfindung, ein Verfahren der eingangs genannten Art zu schaffen, bei dem die Einfallsrichtung von Schallimpulsen auch dann sicher bestimmt werden kann, wenn ein Empfang über Grating-Lobes nicht ausgeschlossen werden kann.

Diese Aufgabe wird erfindungsgemäß durch die Merkmale im Kennzeichenteil des Anspruchs gelöst. Bei einem Richtungsbildner mit Laufzeitkompensation der Empfangssignale werden die Laufzeiten in Zielrichtung durch Kompensationsverzögerungen im Richtungsbildner genau aufgehoben, so daß die Empfangssignale an den Wandlern, die zum Richtcharakteristiksignal zusammengefaßt werden, zeitgleich vorliegen und das Richtcharakteristiksignal bei Empfang eines Schallimpulses am Ausgang des Richtungsbildners sofort seine volle Amplitude erreicht. Bei verzögerten Empfangssignalen, die aus Grating-Lobe-Richtungen einfallen, dispergiert der Pulseinsatz, so daß sich das Richtcharakteristiksignal mit einer endlichen Steigung in der Impulsflanke auf- und abbaut. Werden in verschiedenen Richtcharakteristiksignalen zusammengehörige Schallimpulse entdeckt, so wird in jedem dieser Richtcharakteristiksignale die Steigung der Einhüllenden am Pulseinsatz gemessen. Die größte festgestellte Steigung kennzeichnet die Einfallsrichtung des Schallimpulses, während den anderen Richtungen Scheinziele zuzuordnen sind, die unterdrückt werden. Der Vorteil des erfindungsgemäßen Verfahrens liegt insbesondere darin, daß mit jedem Sonar an Bord eines Wasserfahrzeugs, unabhängig von der zugehörigen Sonarbasis, sei es eine Zylinderbasis, Linearbasis oder ein Conformal-Array, das der Außenkontur des U-Boots oder Oberflächenschiffs angepaßt ist, eine Peilung eines Schallimpulse abstrahlenden Senders möglich ist. Sogenannte Scheinziele werden sicher erkannt und nicht als Ziel in Hauptempfangsrichtung der Richtcharakteristik angezeigt.

Die Erfindung ist anhand eines Ausführungsbeispiels für ein Verfahren zum Bestimmen der Einfallsrichtung empfangener Schallimpulse im Zusammenhang mit einer Sonar-Empfangsanlage näher beschrieben. Es zeigen:

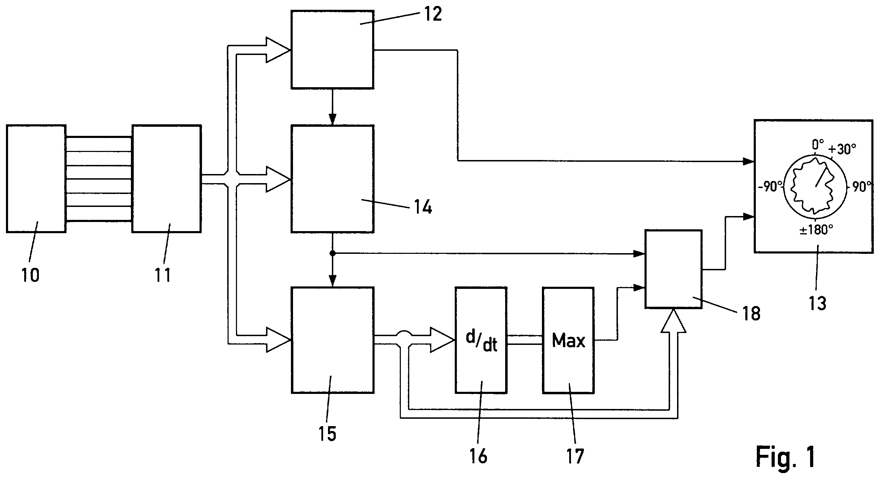

- Fig.1: ein Blockschaltbild,
- Fig.2: ein Diagramm mit Richtcharakteristiksignalen in Abhängigkeit vom Winkel ihrer Empfangsrichtungen,
- Fig.3: ein Diagramm wie in Fig.2 bei einem geringfügigen Versatz des Senders,
- Fig.4,5,6 und 7: Einhüllende der Richtcharakteristiksignale in Abhängigkeit von der Zeit.

Mit einer Hufeisenbasis 10, deren elektroakustische Wandler der äußeren Kontor des Bugs eines U-Boots folgend angeordnet sind, werden Schallwellen empfangen. Die Empfangssignale der Wandler werden in einem nachgeordneten Richtungsbildner 11 in ihrer Laufzeit kompensiert und summiert. Mit sämtlichen Wandlern der Hufeisenbasis 10 werden 200 Richtcharakteristiken gebildet, deren Hauptempfangsrichtungen einen Bereich von ± 180° bzgl. der Längsachse des U-Bootes abdecken, wobei 0° der Vorausrichtung entspricht. Die Hufeisenbasis 10 ist für eine Mittenfrequenz eines breitbandigen Empfangs dimensioniert, um eine Panorama-Lagedarstellung aus empfangenen Breitbandgeräuschen zu erzeugen. Außerdem empfängt die Hufeisenbasis 10 Schallimpulse, die von Sendern fremder Sonaranlagen abgestrahlt werden. Diese Schallimpulse sind beispielsweise monofrequent und weisen eine Frequenz auf, die weit über der Mittenfrequenz des auszuwertenden Empfangsfrequenzbereichs liegt. Ihre Empfangsrichtungen sollen auch in der Panorama-Lagedarstellung angezeigt werden.

In dem Richtungsbildner 11 werden aus den verzögerten Empfangssignalen Richtcharakteristiksignale gebildet. Pegel der Richtcharakteristiksignale werden in einem Energiedetektor 12 miteinander verglichen und Richtcharakteristiksignale mit den größten Pegeln an eine Anzeige 13 zur Lage weitergeschaltet. Außerdem werden in einer Intercept-Signal-Analyseschaltung 14 die detektierten Richtcharakteristiksignale bzgl. ihres Frequenzumfangs, ihres Modulationstyps, ihrer Pulslänge oder ihrer Pulswiederholfrequenz analysiert und bei Erkennen eines empfangenen Schallimpulses in einer Schaltung 15 zum Bestimmen ihrer Einhüllenden gleichgerichtet. Dazu ist die Schaltung 15 mit der Intercept-Signal-Analyseschaltung 14 und dem Richtungsbildner 11 verbunden. Der Schaltung 15 ist eine Differenzierstufe 16 und ein Maximumdetektor 17 nachgeordnet, in denen die Steigung der Einhüllenden und ihr Maximum bestimmt werden. Es wird das Richtcharakteristiksignal ermittelt, dessen Einhüllende die größte Steigung hat. Mit einer nachgeschalteten Verknüpfungslogik 18, die mit der Intercept-Signal-Analyseschaltung 14 verbunden ist, wird eine Anzeige 13 angesteuert, auf der das Richtcharakteristiksignal mit einer speziellen Kennung für die Einfallsrichtung eines Schallimpulses angezeigt wird.

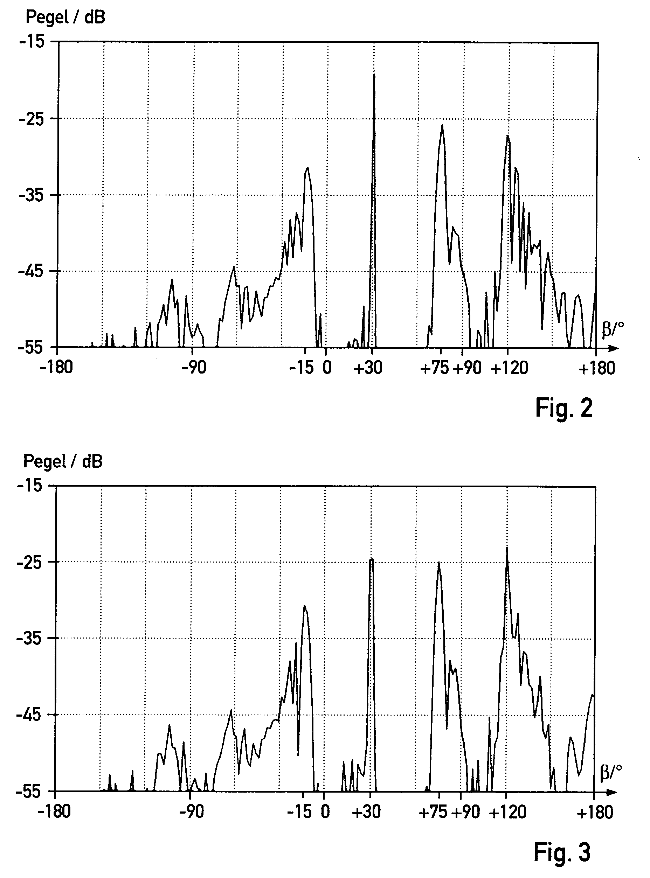

Fig.2 zeigt Pegel der Richtcharakteristiksignale der einzelnen im Richtungsbildner 11 gebildeten Richtcharakteristiken in Abhängigkeit vom Winkel β ihrer Hauptempfangsrichtungen. Unter den Winkeln β = + 30°, β = - 15°, β = + 75° und β = + 120° werden vom Energiedetektor 12 Einfallsrichtungen von Schallwellen erkannt.

Fig.3 zeigt die gleiche Zielsituation nach einer Auswanderung des Ziels um ca. 1°. Ein Pegelvergleich gibt keinen Aufschluß darüber, ob der Empfang über die Hauptkeulen der vier von 200 Richtcharakteristiken erfolgte oder über sogn. Grating-Lobes.

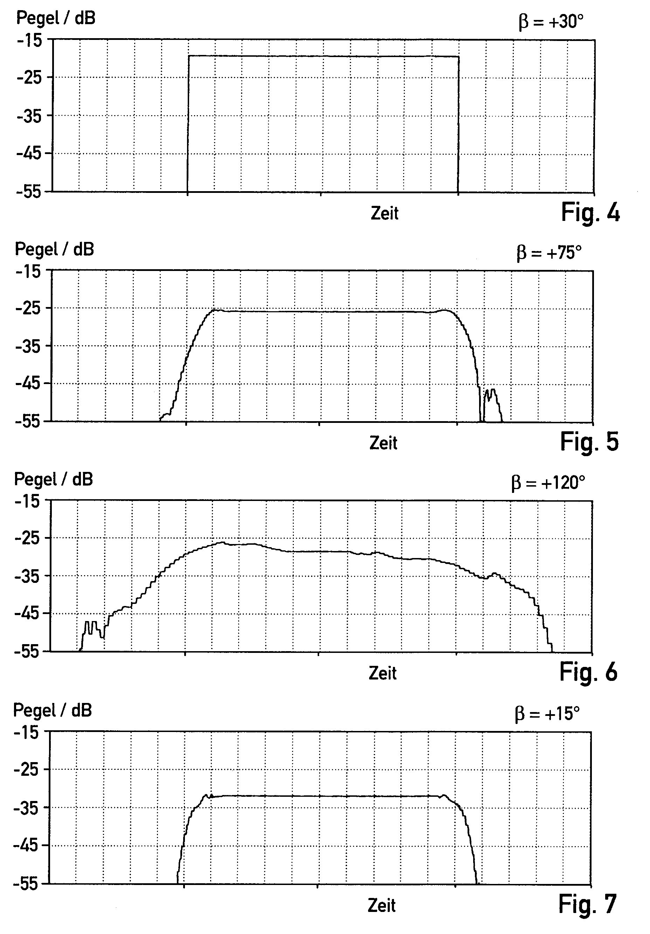

In der Intercept-Analyse-Schaltung 14 wird festgestellt, daß unter allen angegebenen Winkeln β Schallimpulse empfangen wurden. Mit der Schaltung 15 zum Bilden der Einhüllenden werden Verläufe der Einhüllenden der Richtcharakteristiksignale über der Zeit ermittelt, die für β = + 30° in Fig.4, für β = + 75° in Fig.5 und für β = + 120° in Fig.6 und für β = - 15° in Fig.7 gezeigt sind. Die zeitlichen Verläufe der Einhüllenden in den Fig. 4-7 zeigen im Bereich der Vorder- und Rückflanke des Schallimpulses unterschiedliche Steigungen. Die Einhüllende des Richtcharakteristiksignals, deren Hauptkeule in die Empfangsrichtung unter dem Winkel β = 30° weist und die in Fig.4 dargestellt ist, zeigt im Bereich ihrer Vorder- und Rückflanke die größte Steigerung. Der Schallimpuls wurde also unter dem Winkel β = + 30° ausgesendet. Drei Richtcharakteristiken mit den Empfangsrichtungen ihrer Hauptkeulen bei den Winkeln β = - 15°, β = + 75° und β = 120° weisen für die Frequenz der Schallwellen des Schallimpulses ein Grating-Lobe bei β = 30° auf. Dieser Empfang wird dem Winkel β der Hauptempfangsrichtung ihrer Hauptkeulen zugeordnet. Erst durch die Bestimmung der Einhüllenden der Richtcharakteristiksignale und der Steigungen ist die richtige Zuordnung des Schalleinfalls möglich. In der Anzeige 13 wird die Empfangsrichtung für den Schallimpuls unter dem Winkel β = + 30° mit einer entsprechenden Kennung richtig angezeigt.

## Patentansprüche

1. Verfahren zum Bestimmen der Einfallsrichtung empfangener Schallimpulse aus Empfangssignalen einer Sonarbasis mit einem Richtungsbildner zum Bilden von Richtcharakteristiksignalen durch Laufzeitkompensation der Empfangssignale sowie einer Intercept-Signal-Analyseschaltung zum Ermitteln von Richtcharakteristiksignalen mit impulsförmigem Signalinhalt, dadurch gekennzeichnet, daß die Einhüllende jedes Richtcharakteristiksignals, das einen impulsförmigen Signalinhalt aufweist, gebildet wird und die Steigungen der Einhüllenden bestimmt und verglichen werden, daß die Einhüllende mit der größten Steigung ermittelt wird und daß die Empfangsrichtung des zugehörigen Richtcharakteristiksignals der Einfallsrichtung des Schallimpulses zugeordnet wird.
